# EUROPEAN PATENT SPECIFICATION

(11) **EP 3 145 251 B1**
(45) Date of publication and mention of the grant of the patent: **17.11.2021**
(21) Application number: 15792280.8
(22) Date of filing: 08.05.2015
(51) Int. Cl.: H04W 52/02, H04W 72/14

(54) **USER TERMINAL, WIRELESS BASE STATION, AND WIRELESS COMMUNICATION METHOD**
BENUTZERENDGERÄT, DRAHTLOSE BASISSTATION UND DRAHTLOSKOMMUNIKATIONSVERFAHREN
TERMINAL UTILISATEUR, STATION DE BASE SANS FIL ET PROCÉDÉ DE COMMUNICATION SANS FIL

(30) Priority: 15.05.2014 JP 2014101526
(43) Date of publication of application: 22.03.2017
(73) Proprietor: NTT DOCOMO, INC., Chiyoda-ku Tokyo 100-6150 (JP)
(72) Inventor: UCHINO, Tooru, Tokyo 100-6150 (JP); KIYOSHIMA, Kohei, Tokyo 100-6150 (JP)
(74) Representative: Hoffmann Eitle
(86) International application number: PCT/JP2015/063245
(87) International publication number: WO 2015/174327

(56) References cited:
- WO-A1-2012/013215
- WO-A1-2013/066044
- JP-A- 2013 090 058
- US-A1- 2011 292 854
- ERICSSON ET AL.: 'Value range of drx- InactivityTimer' 3GPP TSG-RAN WG2 MEETING #74 R2-113415 XP050495508
- RENESAS MOBILE EUROPE: 'Active time for Scheduling Request' 3GPP TSG-RAN WG2 MEETING #79BIS R2-125022 XP050666760
- None

## Description

### Technical Field

The present invention relates to a user terminal, a radio communication method, and a system.

### Background Art

In the UMTS (Universal Mobile Telecommunications System) network, the specifications of long term evolution (LTE) have been drafted for the purpose of further increasing high speed data rates, providing lower delays and so on (see non-patent literature 1). Also, successor systems of LTE (also referred to as, for example, "LTE-advanced" (LTE-A), "FRA" (Future Radio Access), 4G and so on) have been under study for the purpose of achieving further broadbandization and increased speed beyond LTE.

LTE and LTE-A employ discontinuous reception (DRX: Discontinuous reception), in which user terminals switch off the receiving circuit in a predetermined cycle (see non-patent literature 2). By employing DRX, the power consumption of user terminals can be reduced. See WO 2013/066044 A1, WO 2012/013215 A1 and US 2011/292854 A1.

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall Description; Stage 2"

Non-Patent Literature 2: 3GPP TS 36.321 "Evolved Universal Terrestrial Radio Access (E-UTRA); Medium Access Control (MAC) Protocol Specification"

### Summary of Invention

### Technical Problem

In conventional discontinuous reception (DRX) operations, a user terminal controls the transition to the DRX state with a timer (for example, a DRX-inactivity timer) that is started when a downlink control signal (PDCCH) is received, and/or based on a MAC control element (for example, a DRX MAC CE) that commands a transition to the DRX state. Meanwhile, a user terminal that has transmitted/received data and entered the non-DRX state keeps operating in the active state even if no data is transmitted/received after this, until the DRX-inactivity timer expires and/or until a DRX MAC CE is reported.

In LTE-A and later systems, user terminals are presumed to carry out radio communication by using a plurality of fundamental frequency blocks (component carriers), and there is a demand for further reduction of power consumption.

The present invention has been made in view of the above, and it is therefore an object of the present invention to provide a user terminal a radio communication method, and a system which can reduce the power consumption of user terminals more in comparison to conventional DRX control.

### Solution to Problem

According to one aspect of the present invention, there is provided a user terminal as set out in Claim 1.

According to another aspect of the present invention, there is provided a radio communication method as set out in Claim 3.

According to another aspect of the present invention, there is provided a system as set out in Claim 4.

### Advantageous Effects of Invention

According to the present invention, it is possible to reduce the power consumption of user terminals more in comparison to conventional DRX control.

### Brief Description of Drawings

FIGs. 1 provide diagrams to explain discontinuous reception (DRX) control;
FIG. 2 is another diagram to explain discontinuous reception (DRX) control;
FIG. 3 is a diagram to explain an example of discontinuous reception (DRX) control to use the DRX MAC CE;
FIG. 4 is a diagram to explain an example of discontinuous reception (DRX) control according to an implementation example;
FIG. 5 is a diagram to explain another example of discontinuous reception (DRX) control according to the implementation example;
FIG. 6 is a diagram to explain an another example of discontinuous reception (DRX) control according to the implementation example;
FIG. 7 is a diagram to explain an example of a discontinuous reception (DRX) control operation flow according to the implementation example;
FIGs. 8 provide diagrams to show examples of MAC CE formats for use in discontinuous reception (DRX) control according to the implementation example;
FIG. 9 is a schematic diagram to show an example of a radio communication system according to the present embodiment;
FIG. 10 is a diagram to show an overall structure of a radio base station according to an implementation example;
FIG. 11 is diagram to show a functional structure of a radio base station according to the implementation example;
FIG. 12 is a diagram to show an overall structure of a user terminal according to the present embodiment; and
FIG. 13 is a diagram to show a functional structure of a user terminal according to the present embodiment.

### Description of Embodiments and Implementation Examples

Described herein is a user terminal that has a receiving section that receives a DL signal, which at least includes a UL grant, and a DRX control section that controls a discontinuous reception operation, and, in this user terminal, the DRX control section, when receiving the DL signal including the UL grant, controls the discontinuous reception operation based on DRX transition command information included in the DL signal.

As described earlier, in LTE/LTE-A systems, discontinuous reception (DRX: Discontinuous Reception) control is employed for the purpose of saving the battery of user terminals. In DRX control, a user terminal that is "RRC_CONNECTED" (meaning that an RRC connection is established between the user terminal and a radio base station) is controlled in two states, namely the "active state" and the "inactive state."

A user terminal in the active state monitors the downlink control channel (which may be the PDCCH (Physical Downlink Control CHannel) or the EPDCCH (Enhanced Physical Downlink Control CHannel), collectively referred to as the "PDCCH"). Also, to the radio base station, the user terminal reports feedback information (channel state information (CSI) including CQI (Channel Quality Indicator), PMI (Precoding Matrix Indicator), RI (Rank Indicator), PTI (Precoding Type Indicator), etc.), uplink reference signals (SRS: Sounding Reference Signal), and so on.

On the other hand, a user terminal in the inactive state does not monitor the downlink control channel or report feedback information. By this means, it becomes possible to reduce the user terminal's battery consumption.

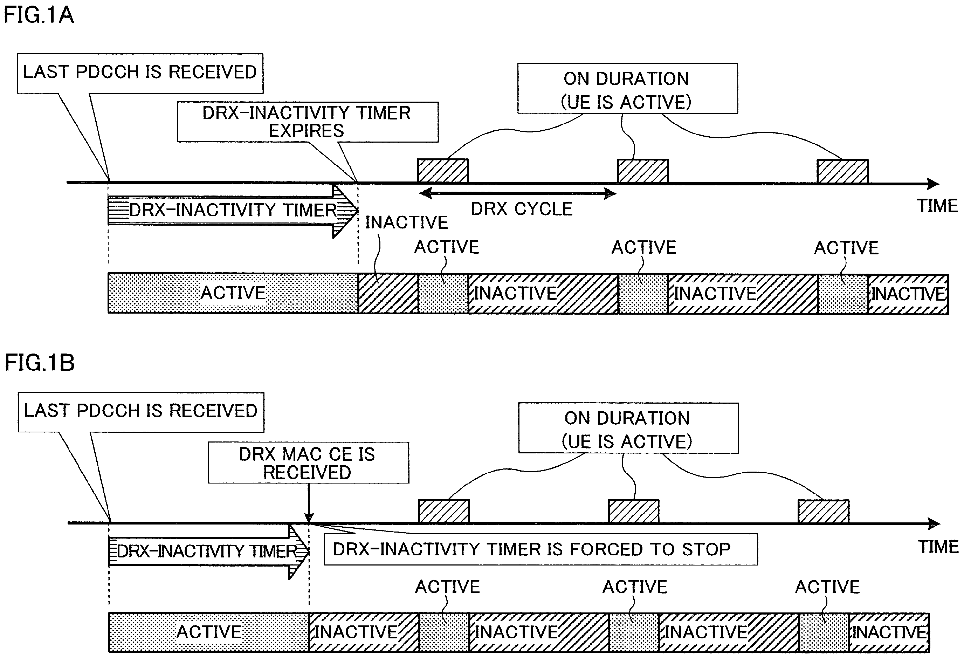

FIGs. 1 show examples of discontinuous reception (DRX) control. Note that FIG. 1A shows a case where the user terminal transitions to the discontinuous reception (DRX) state upon expiration of the DRX-inactivity timer, and FIG. IB shows a case where the user terminal transitions to discontinuous reception following a MAC control element (DRX command MAC control element) that commands a transition to the DRX state.

The DRX cycle specifies the cycle combining an ON duration and a sleep duration that follows the ON duration. Note that, in the ON duration, the user terminal assumes the active state and receives downlink signals such as the PDCCH. On the other hand, in the sleep duration, the user terminal stops receiving downlink signals such as the PDCCH.

In FIGs. 1, when the user terminal successfully decodes the PDCCH for the user terminal in the ON duration, the user terminal starts a DRX-inactivity timer. Here, the DRX-inactivity timer is a timer that measures a predetermined period after the PDCCH is successfully decoded.

As shown in FIG. 1A, the user terminal continues assuming the active state until the DRX-inactivity timer expires, and, when the DRX-inactivity timer corresponding to the last PDCCH that was received expires, starts the above-mentioned DRX cycle (transitions to the discontinuous reception state). Also, when the user terminal successfully decodes the PDCCH for the user terminal before the DRX-inactivity timer expires, the user terminal re-starts the DRX-inactivity timer.

Also, as shown in FIG. 1B, even before the DRX-inactivity timer expires, if the user terminal receives a predetermined MAC control element (DRX MAC CE: DRX command MAC Control Element), the user terminal starts the DRX cycle. That is, upon receiving the DRX MAC CE, the user terminal forces the DRX-inactivity timer to stop, and transitions to the discontinuous reception state. In this way, by using the DRX MAC CE, the radio base station can let the user terminal transition to the discontinuous reception state.

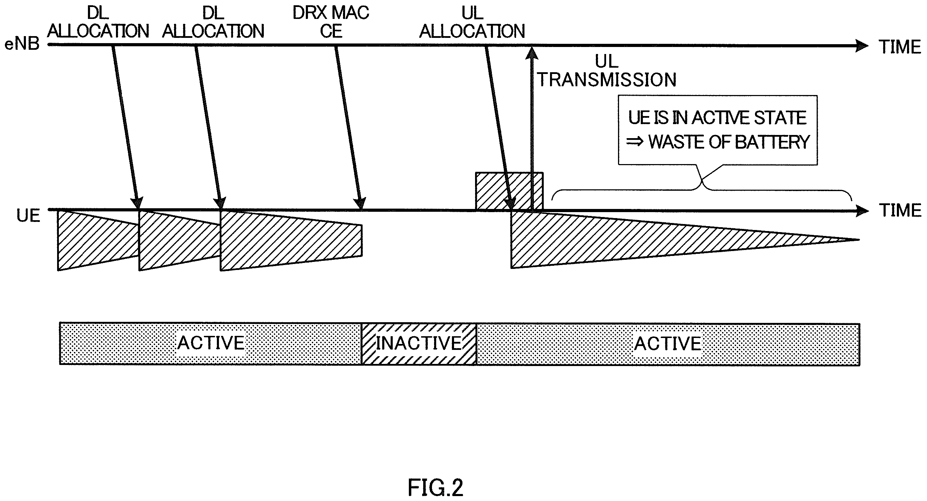

However, since the conventional DRX MAC CE (DRX command MAC Control Elements) is transmitted in the downlink shared channel (PDSCH), the user terminal can be forced to transition to the DRX state only while DL allocation control is applied to the user terminal. Consequently, while UL allocation control is applied to the user terminal (while UL grants are transmitted), it is not possible to force the user terminal to transition to the discontinuous reception state (see FIG. 2). As a result of this, when a UL grant is allocated to the user terminal, the user terminal assumes the active state for a predetermined period of time (for example, until the time the DRX-inactivity timer expires) from the time the UL grant is allocated, even if no data is transmitted/received after this.

In this way, the present inventors have focused on the fact that the battery saving in user terminals after UL grant allocation control is not sufficient with conventional DRX control, and worked on the DRX control after UL grant allocation.

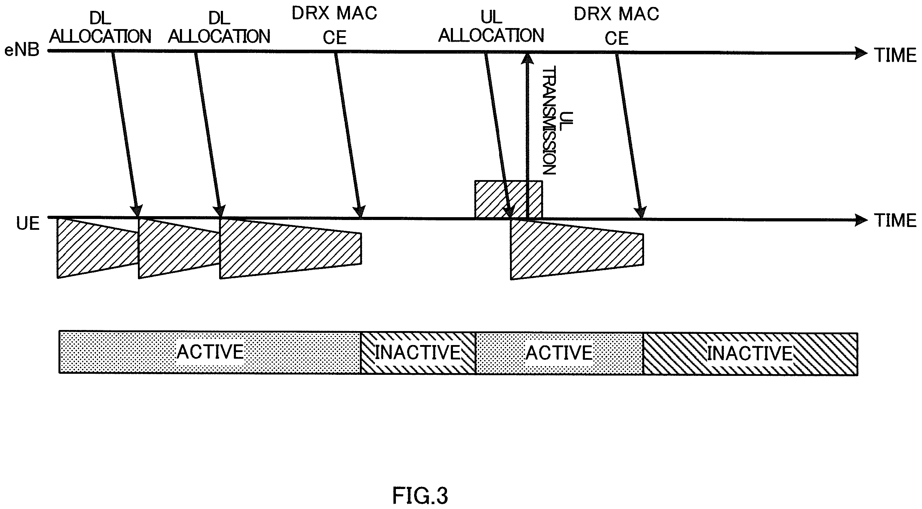

For example, a method to transmit the conventional DRX MAC CE shortly after a UL grant is allocated, and force a user terminal to transition to the discontinuous reception state may be possible (see FIG. 3). However, in this case, a DL signal needs to be transmitted only to let the user terminal transition to the discontinuous reception state, and there is a threat of leading to a decrease in the efficiency of the use of radio resources.

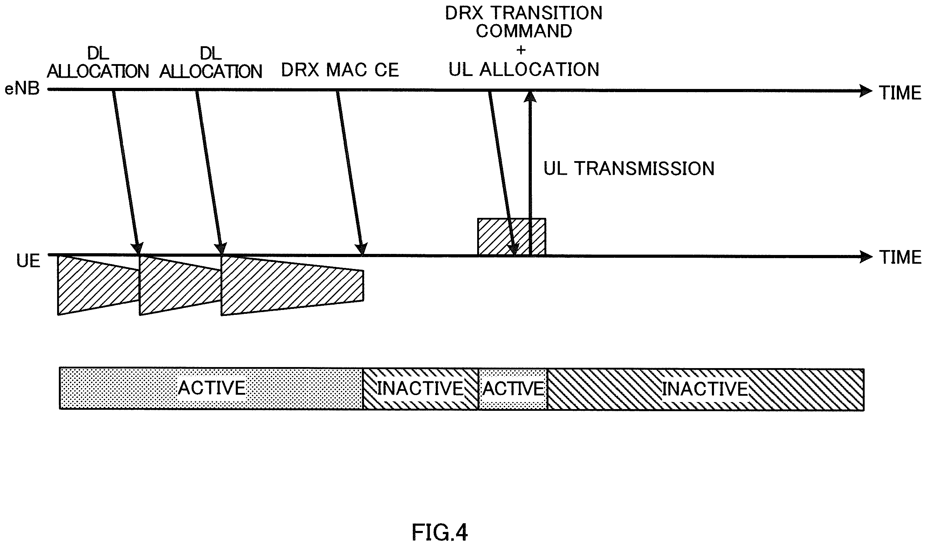

So, the present inventors have come up with a control method to make the user terminal transition to the discontinuous reception state when UL allocation is commanded by using a UL grant (when a UL grant is transmitted). To be more specific, when a UL grant is indicated to the user terminal, information to command whether or not to transition to the discontinuous reception state is reported together (DRX transition command information) (see FIG. 4).

The user terminal having received the UL grant controls the discontinuous reception operations in accordance with the content of the DRX transition command information. Note that the DRX transition command information may be information to indicate the timing to transition to the discontinuous reception state to the user terminal having received the UL grant, or information to command not to start or re-start the DRX-inactivity timer.

In this way, by reporting DRX transition command information together with a UL grant to the user terminal, the user terminal can transition to the discontinuous reception state shortly after receiving the UL grant. By this means, the power consumption of the user terminal can be reduced more in comparison to conventional DRX control. Also, it is no longer necessary to transmit DL signals only to command discontinuous reception to the user terminal, so that it is possible to reduce the decrease of the efficiency of the use of radio resources.

Also, with the present embodiment, it is possible to send a UL grant and a command for a transition to the discontinuous reception state to the user terminal by using downlink control information (DCI) or a MAC control element (MAC CE). Hereinafter, cases using each control information will be described below.

### (First Example)

With a first example, a case will be described in which a UL grant and a command for a transition to discontinuous reception are sent to a user terminal at the same timing by using downlink control information (DCI).

With the first example, a radio base station can command a DRX transition to a user terminal by using downlink control information (DCI) that includes a UL grant. For example, the radio base station configures a bit field for DRX transition command information in downlink control information (DCI), and allocates this DCI to the downlink control channel (PDCCH). Note that DCI formats 0, 4 and so on can be used as downlink control information.

The user terminal receives the downlink control channel, in which the UL grant is included, and, furthermore, detects the bit that indicates whether or not to make a DRX transition (DRX transition command information). When a transition to discontinuous reception is commanded in the downlink control information received, the user terminal transitions to the discontinuous reception state. For example, the user terminal does not start the DRX-inactivity timer, and transitions to the discontinuous reception state after the ON duration is over (see FIG. 4).

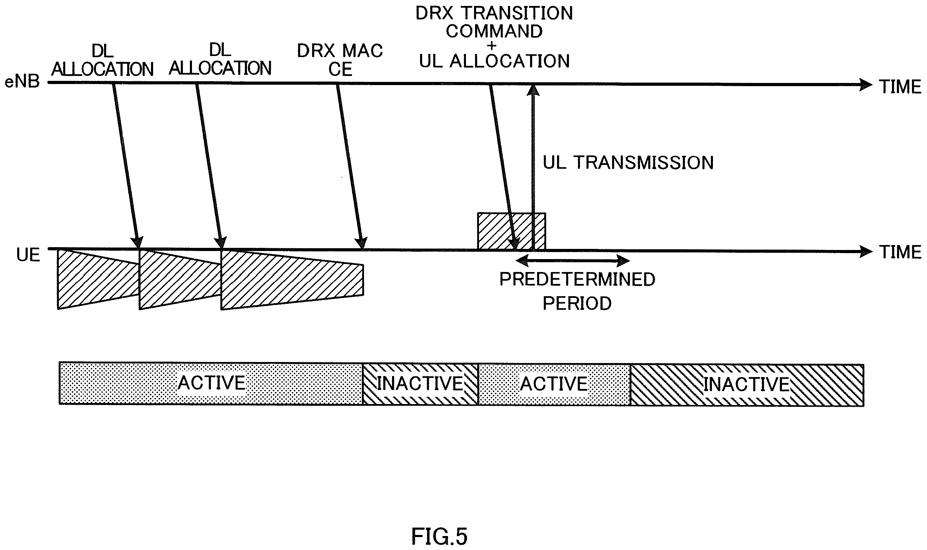

Also, when a command for a transition to the discontinuous reception state is sent together with a UL grant, the user terminal may be controlled to transition to the discontinuous reception state a predetermined period after the bit that corresponds to the DRX transition command information is detected, instead of transitioning to the discontinuous reception state soon (see FIG. 5). The predetermined period has only to be configured shorter than the duration of the DRX-inactivity timer. By this means, it is possible to adequately carry out communication when data is transmitted/received within a predetermined period after a UL grant is allocated. Also, it is possible to flexibly control the timing the user terminal transitions to the discontinuous reception state.

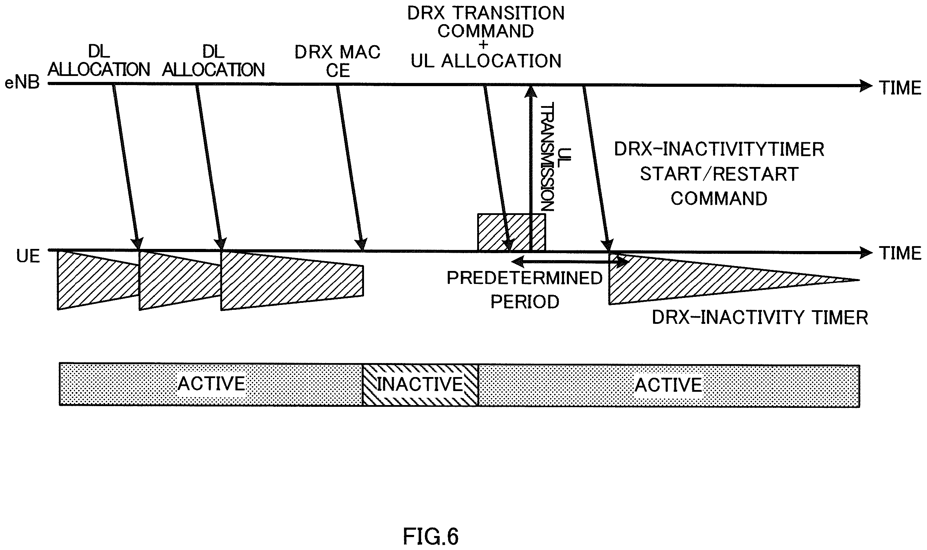

Also, according to the present embodiment, when the user terminal having received a DRX transition command additionally receives a command to start or re-start the DRX-inactivity timer before making a transition to discontinuous reception (for example, within the predetermined period shown in FIG. 5), the user terminal may cancel the transition operations to discontinuous reception triggered by the DRX transition command (see FIG. 6). By this means, even when subsequent data is produced shortly after the eNB decides to make the user terminal transition to DRX, it is possible to carry out communication without unnecessarily making the user terminal transition to DRX.

In this case, the user terminal may be structured to cancel the transition operations to discontinuous reception only when the PDCCH to command a start or a re-start of the DRX-inactivity timer is received a predetermined number of times. By this means, it is possible to reduce the possibility of returning to non-DRX due to PDCCH detection failures (false detection).

Also, even when a transition to discontinuous reception is commanded, if the user terminal is unable to receive the delivery acknowledgement signal (ACK) in response to the UL data signal (PUSCH signal) that has been transmitted based on the UL grant, the user terminal may cancel the transition to discontinuous reception. That is, when the user terminal is unable to receive an ACK in response to the PUSCH, the user terminal can operate not to transition to DRX in expectation of a PDCCH retransmission from the radio base station. In this way, the transition operations to discontinuous reception is controlled by taking into consideration the positive delivery acknowledgement signal in response to the PUSCH signal, so that data can be transmitted/received adequately.

Note that whether or not the DRX transition cancel operation in the user terminal applies may be controlled by the radio base station by using the RRC signal, the MAC signal and so on. By this means, it is possible to execute more flexible DRX control in the user terminal based on the state of communication.

Also, although a case has been shown with the above description where a user terminal operates to transition to discontinuous reception (DRX) when a DRX transition is commanded, this is by no means limiting, and it is equally possible to assume operations in which the DRX-inactivity timer is not started or re-started. That is, the radio base station, when sending a UL grant, may also send a command for not starting or re-starting the DRX-inactivity timer to the user terminal together, by using downlink control information (DCI).

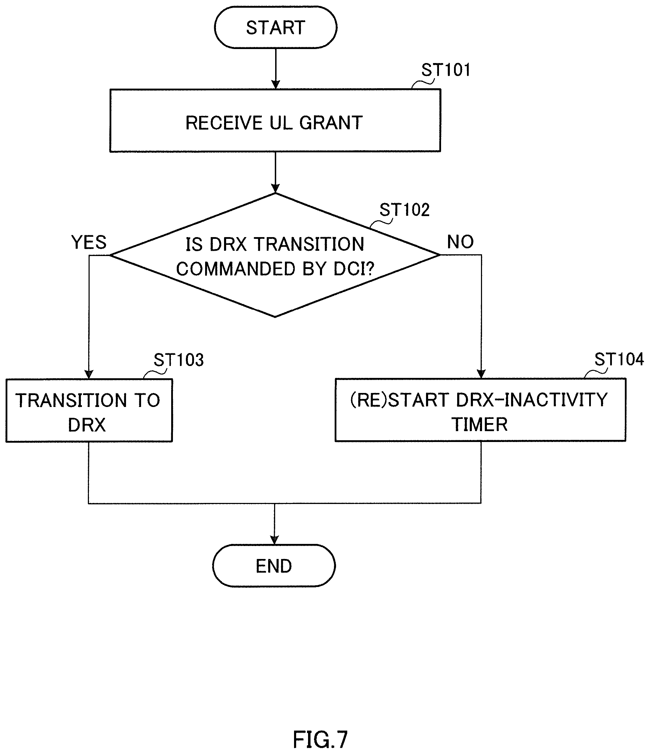

Next, an example of the operation method, in which a UL grant and a DRX command are sent by using downlink control information will be described with reference to FIG. 7.

First, the radio base station transmits downlink control information (DCI), which includes a UL grant, to the user terminal, by using the downlink control channel (PDCCH/EPDCCH). Meanwhile, the user terminal receives this downlink control information (UL grant) (ST101). Based on the UL grant received, the user terminal controls the transmission of UL data (PUSCH signal).

Also, the user terminal decides whether a transition to discontinuous reception (DRX) is commanded in the downlink control information (DCI) received (ST102). For example, the user terminal detects the DRX transition command information included in the downlink control information, and decides whether or not to transition to the discontinuous reception state based on this DRX transition command information.

When a transition to discontinuous reception is commanded in the downlink control information (ST102: Yes), the user terminal transitions to the discontinuous reception state (ST103). For example, when a transition to the discontinuous reception state is commanded in the DRX transition command information, the user terminal transitions to the discontinuous reception state after transmitting UL data (PUSCH signal). When doing so, the user terminal may transition to the discontinuous reception state a predetermined period after the transition to discontinuous reception is commanded, as shown in above FIG. 5.

Alternatively, when a transition to discontinuous reception is commanded in the downlink control information (ST102: Yes), the user terminal may operate not to start or re-start the DRX-inactivity timer.

Also, if the user terminal, after having received a DRX transition command in ST102, additionally receives a command to start or re-start the DRX-inactivity timer before making a transition to the discontinuous reception state, the user terminal may cancel the transition operations to the discontinuous reception state. Also, even when a transition to the discontinuous reception state is commanded in ST102, if the user terminal is unable to receive the delivery acknowledgement signal (ACK) in response to the UL data signal (PUSCH signal) that has been transmitted based on the UL grant, the user terminal may cancel the transition to the discontinuous reception state.

When a transition to the discontinuous reception state is not commanded in the downlink control information (ST102: No), the user terminal starts or re-starts the DRX-inactivity timer (ST104). For example, when the radio base station further transmits/receives more data with respect to the user terminal, the radio base station commands the user terminal not to transition to the discontinuous reception (DRX) state, with downlink control information.

In this way, by sending a UL grant and a command for a transition to discontinuous reception to the user terminal at the same timing by using downlink control information (DCI), it is possible to reduce the waste of radio resources and save the battery of the user terminal.

### (Second Example)

With a second example, a case will be described in which a UL grant and a command for a transition to the discontinuous reception state are sent to the user terminal at the same timing by using a MAC control element (MAC CE).

According to the second example, the radio base station transmits a predetermined MAC CE that indicates a UL grant and a command for a DRX transition (for example, DRX command with UL grant MAC CE) to the user terminal. The user terminal, upon receiving this predetermined MAC CE, performs UL transmission operations and transition operations to the DRX state (see FIG. 4).

The user terminal, when detecting a predetermined MAC CE to indicate a UL grant and a command for a DRX transition, the user terminal may be controlled to transition to the discontinuous reception state a predetermined period after the detection, instead of transitioning to the discontinuous reception state soon. The predetermined period has only to be configured shorter than the duration of the DRX-inactivity timer. By this means, it is possible to adequately carry out communication when data is transmitted/received within a predetermined period after a predetermined MAC CE to indicate a UL grant and a command for a DRX transition is received. Also, it is possible to flexibly control the timing the user terminal transitions to the discontinuous reception state.

Also, according to the presentimplementation example, when the user terminal having received a predetermined MAC CE to indicate a UL grant and a DRX transition command additionally receives a command to start or re-start the DRX-inactivity timer before making a transition to discontinuous reception (for example, within the predetermined period shown in FIG. 5), the user terminal may cancel the transition operations to discontinuous reception triggered by the DRX transition command (see FIG. 6).

Also, even when the user terminal receives a predetermined MAC CE to indicate a UL grant and a DRX transition command, if the user terminal is unable to receive the delivery acknowledgement signal (ACK) in response to the UL data signal (PUSCH signal) that has been transmitted based on the UL grant, the user terminal may cancel the transition to the discontinuous reception. That is, when the user terminal is unable to receive an ACK in response to the PUSCH, the user terminal can operate not to transition to DRX in expectation of a PDCCH retransmission from the radio base station. In this way, the transition operations to discontinuous reception is controlled by taking into consideration the positive delivery acknowledgement signal in response to the PUSCH signal, so that data can be transmitted/received adequately.

Note that whether or not the DRX transition stop operations in the user terminal applies may be controlled by the radio base station by using the RRC signal, the MAC signal and so on. By this means, it is possible to execute more flexible DRX control in the user terminal based on the state of communication.

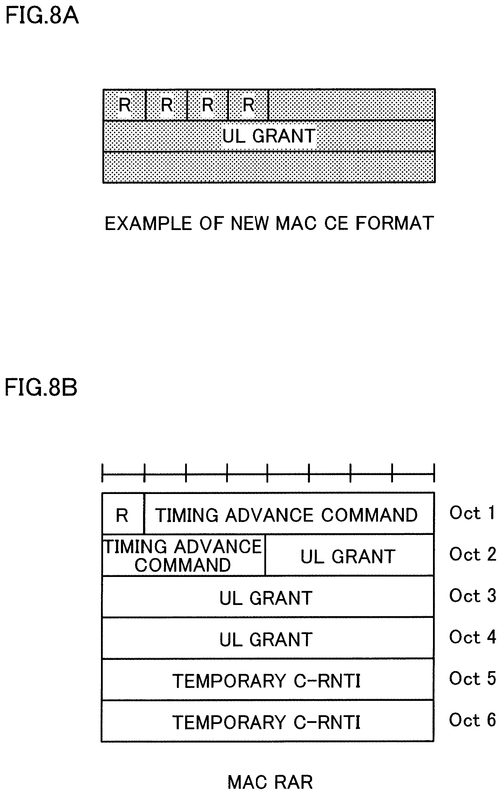

A new MAC CE format can be used as a predetermined MAC CE to indicate a UL grant and a command for a DRX transition. For example, as shown in FIG. 8A, a new MAC CE format (3 bytes) to include a UL grant can be used.

Alternatively, it is also possible to use (re-use) the conventional MAC PDU (Protocol Data Unit) format as a MAC CE to indicate a UL grant and a DRX transition command. For example, it is possible to use the random access response (RAR), which can indicate a UL grant within the MAC payload (see FIG. 8B). In this case, when the user terminal receives an RAR in response to the user terminal's C-RNTI (Cell Radio Network Temporary Identifier), the user terminal can interpret this RAR as a MAC CE to indicate a UL grant and a command for a DRX transition, and performs UL grant receiving operations and DRX transition operations.

Note that, with the conventional RAR, the user terminal is capable of transmission only by using the RA-RNTI (Random Access RNTI). Consequently, when, as shown above, the MAC RAR is used as a MAC CE to indicate a UL grant and a command for a DRX transition, the user terminal is controlled to operate in expectation of an RAR in response to the C-RNTI as well.

In this way, by indicating a UL grant and a command for a transition to discontinuous reception to the user terminal at the same timing by using a predetermined MAC CE, it is possible to reduce the waste of radio resources and save the battery of the user terminal.

### (Radio Communication System)

Now, the radio communication system according to the present embodiment will be described in detail below. In this radio communication system, the above-described radio communication methods according to the first and second examples are employed. Note that the above radio communication methods according to the first and second examples may be applied individually or may be applied in combination.

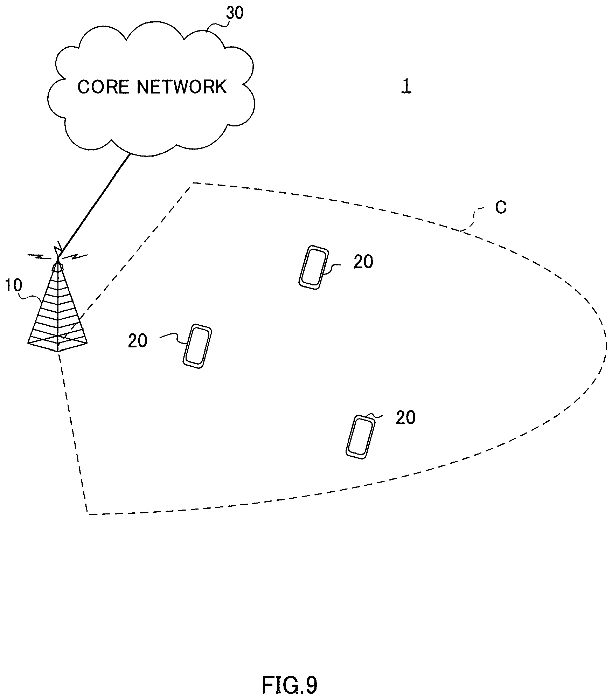

FIG. 9 is a schematic structure diagram of the radio communication system according to the present embodiment. As shown in FIG. 9, the radio communication system 1 is comprised of a radio base station 10 that forms a cell C, user terminals 20 and a core network 30 with which the radio base station 10 is connected. Note that the number of radio base stations 10 and user terminals 20 is not limited to what is illustrated in FIG. 9.

Also, the radio base station 10 and the user terminals 20 have hardware including a communication interface, a processor, a memory, a display and input keys, and, in the memory, software modules to be executed on the processor are stored. Also, the functional structures of the radio base station 10 and the user terminals 20 may be implemented by using the above-described hardware, may be implemented by using the software modules to be executed on the processor, or may be implemented by combining both of these.

The radio base station 10 is a radio base station to have a predetermined coverage. Note that the radio base station 10 may be a macro base station to have a relatively wide coverage (which may be an eNodeB, a macro base station, a central node, a transmission point, a transmitting/receiving point and so on), or may be a small base station to have a local coverage (which may be a small base station, a pico base station, a femto base station, an HeNB (Home eNodeB), an RRH (Remote Radio Head), a micro base station, a transmission point, a transmitting/receiving point and so on).

The radio base station 10 is connected to the core network 30. In the core network 30, core network devices such as an MME (Mobility Management Entity), an S-GW (Serving-GateWay), a P-GW (Packet-GateWay) and so on are provided. The MME provided in the core network 30 is a device to perform mobility management for the user terminals 20, and may be connected to the radio base station 10 via a C-plane interface (for example, the S1-C interface).

Also, the S-GW provided in the core network 30 is a device to process the user data that is transmitted from the radio base station 10 to the user terminals 20, and may be connected with the radio base station 10 via a U-plane interface (for example, the S1-U interface).

The user terminals 20 are terminals to support various communication schemes such as LTE, LTE-A and so on, and may be either mobile communication terminals or stationary communication terminals. The user terminals 20 carry out downlink/uplink communication with the radio base station 10.

Here, communication channels that are used in the radio communication system shown in FIG. 9 will be described. Downlink communication channels include a PDSCH (Physical Downlink Shared CHannel), which is used by each user terminal 20 on a shared basis, and downlink L1/L2 control channels (PDCCH, PCFICH, PHICH and enhanced PDCCH). User data and higher control information are communicated by the PDSCH. Scheduling information for the PDSCH and the PUSCH and so on are communicated by the PDCCH (Physical Downlink Control CHannel). The number of OFDM symbols to use for the PDCCH is communicated by the PCFICH (Physical Control Format Indicator CHannel). HARQ ACKs/NACKs for the PUSCH are communicated by the PHICH (Physical Hybrid-ARQ Indicator CHannel). Also, the scheduling information for the PDSCH and the PUSCH and so on may be communicated by the enhanced PDCCH (EPDCCH) as well. This EPDCCH is frequency-division-multiplexed with the PDSCH (downlink shared data channel).

Uplink communication channels include a PUSCH (Physical Uplink Shared CHannel), which is used by each user terminal 20 on a shared basis as an uplink data channel, and a PUCCH (Physical Uplink Control CHannel), which is an uplink control channel. User data and higher control information are communicated by this PUSCH. Also, downlink channel state information (CSI), ACK/NACK and so on are communicated by the PUCCH.

Also, in the radio communication system 1, as duplex scheme, a frequency division duplex (FDD) scheme, a time division duplex (TDD) scheme, or both of these may be used.

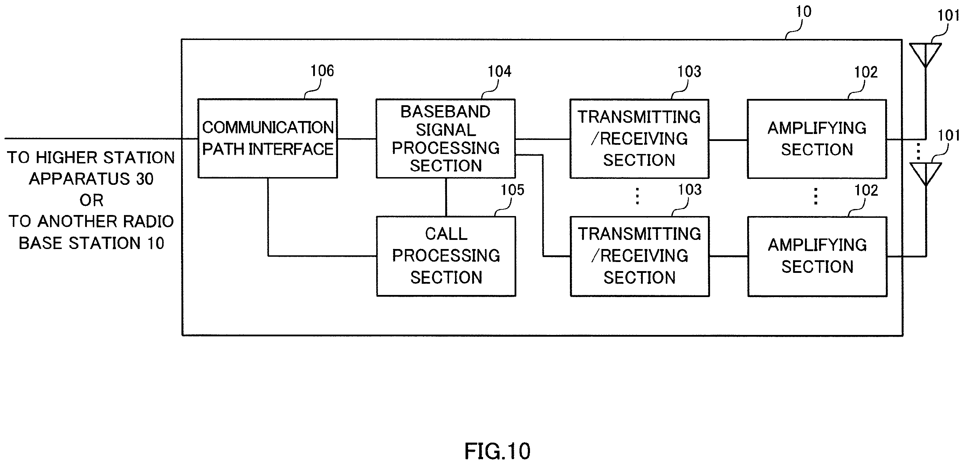

FIG. 10 is a diagram to show an overall structure of a radio base station 10 according to an implementation example. The radio base station 10 has a plurality of transmitting/receiving antennas 101 for MIMO communication, amplifying sections 102, transmitting/receiving sections (transmission section/receiving section) 103, a baseband signal processing section 104, a call processing section 105 and a communication path interface 106.

User data to be transmitted from the radio base station 10 to a user terminal 20 on the downlink is input from the higher station apparatus 30 to the baseband signal processing section 104, via the communication path interface 106.

In the baseband signal processing section 104, a PDCP layer process, division and coupling of user data, RLC (Radio Link Control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process and a precoding process are performed, and the result is forwarded to each transmitting/receiving section 103. Furthermore, downlink control channel signals are also subjected to transmission processes such as channel coding and an inverse fast Fourier transform, and forwarded to each transmitting/receiving section 103.

Also, the baseband signal processing section 104 reports information (DRX transition command information) that allows the user terminal 20 to control the discontinuous reception operations (the transition operations to discontinuous reception). The DRX transition command information can be reported to the user terminal by using downlink control information (for example, DCI to include a UL grant), a predetermined MAC CE (MAC CE to command DRX) and so on.

Each transmitting/receiving section 103 converts the baseband signals, which are pre-coded and output from the baseband signal processing section 104 on a per antenna basis, into a radio frequency band. The amplifying sections 102 amplify the radio frequency signals having been subjected to frequency conversion, and transmit the signals through the transmitting/receiving antennas 101. The transmitting/receiving sections 103 function as transmission sections to transmit DL signals that at least include UL grants and DRX transition command information.

On the other hand, as for data to be transmitted from the user terminal 20 to the radio base station 10 on the uplink, radio frequency signals that are received in the transmitting/receiving antennas 101 are each amplified in the amplifying sections 102, converted into the baseband signal through frequency conversion in each transmitting/receiving section 103, and input in the baseband signal processing section 104.

In the baseband signal processing section 104, the user data that is included in the input baseband signal is subjected to an FFT process, an IDFT process, error correction decoding, a MAC retransmission control receiving process, and RLC layer and PDCP layer receiving processes, and the result is forwarded to the core network 30 via the communication path interface 106. The call processing section 105 performs call processing such as setting up and releasing communication channels, manages the state of the radio base stations 10 and manages the radio resources.

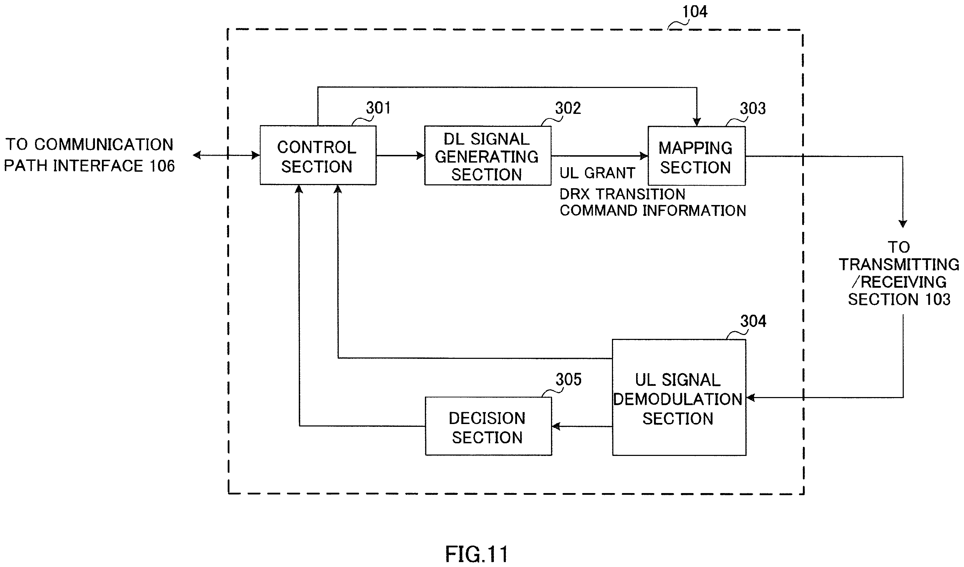

FIG. 11 is a diagram to show a principle functional structure of the baseband signal processing section 104 provided in the radio base station 10 according to the implementation example. As shown in FIG. 11, the baseband signal processing section 104 provided in the radio base station 10 is comprised at least of a control section 301, a DL signal generating section 302, a mapping section 303, a UL signal demodulation section 304 and a decision section 305.

The control section 301 controls the scheduling of downlink user data that is transmitted in the PDSCH, downlink control information that is transmitted in the PDCCH and/or the enhanced PDCCH (EPDCCH), downlink reference signals and so on (DL allocation control). Also, the control section 301 controls the scheduling of uplink data that is transmitted in the PUSCH, uplink control information that is transmitted in the PUCCH or the PUSCH, and uplink reference signals (UL allocation control). Information about the allocation control of uplink signals (uplink control signals and uplink user data) is reported to user terminals by using downlink control signals (DCI).

To be more specific, the control section 301 controls the allocation of radio resources to downlink signals and uplink signals based on command information from the core network 30, feedback information from each user terminal 20 and so on. That is, the control section 301 functions as a scheduler. Also, the control section 301 can also control the discontinuous reception (DRX) operations in user terminals.

For example, the control section 301, when carrying out UL allocation and also making a user terminal transition to the discontinuous reception state, commands the DL signal generating section 302 to generate a UL grant and information related to a command for a transition to the discontinuous reception state (DRX transition command information).

The DL signal generating section 302 generates a MAC control element (MAC CE), a physical downlink channel signal, and so on. For example, the DL signal generating section 302 generates a downlink control signal (PDCCH signal and/or EPDCCH signal), a downlink data signal (PDSCH signal) and so on, determined to be allocated by the control section 301. To be more specific, based on commands from the control section 301, the DL signal generating section 302 generates DL assignments, which report downlink signal allocation information, and UL grants, which report uplink signal allocation information.

Also, the DL signal generating section 302 generates a PDCCH signal that includes a UL grant and information related to a command for a transition to the discontinuous reception state (DRX transition command information), or a predetermined MAC CE (for example, DRX command with UL grant MAC CE). When generating a predetermined MAC CE, the DL signal generating section 302 can use the MAC CE formats shown in above FIGs. 8.

The mapping section 303 controls the allocation of the downlink control signals and the downlink data signals generated in the DL signal generating section 302 to radio resources based on commands from the control section 301.

The UL signal demodulation section 304 demodulates the feedback signals (delivery acknowledgement signals and/or the like) transmitted from the user terminal through an uplink control channel (PUCCH), and outputs the results to the control section 301. Also, the UL signal demodulation section 304 demodulates the uplink data signals transmitted from the user terminal through an uplink shared channel (PUSCH), and outputs the results to the decision section 305.

The decision section 305 makes retransmission control decisions (ACKs/NACKs) based on the demodulation results in the UL signal demodulation section 304, and, furthermore, outputs the results to the control section 301. Note that the results made in the decision section 305 (delivery acknowledgement signals) are reported to the user terminal by using the PHICH (Physical Hybrid-ARQ Indicator CHannel).

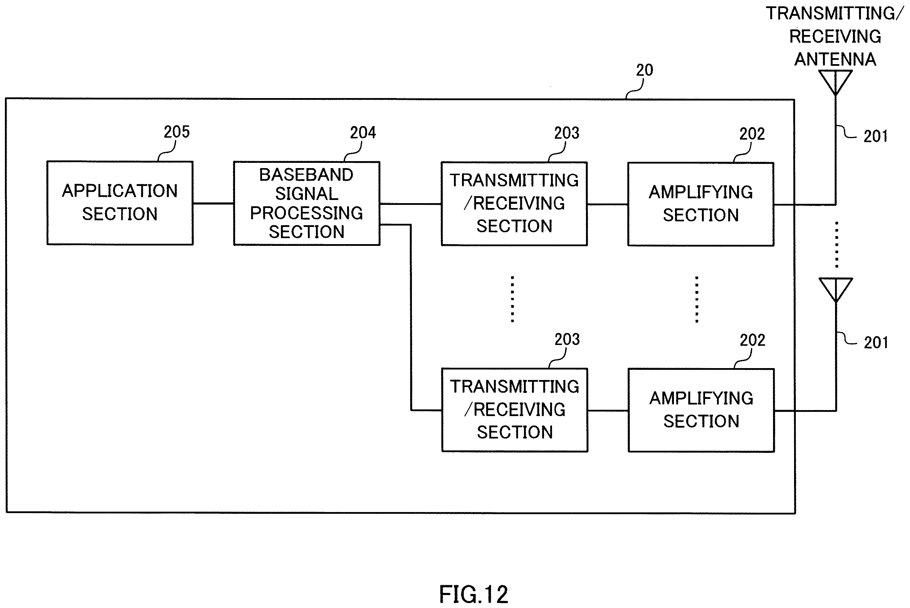

FIG. 12 is a diagram to show an overall structure of a user terminal 20 according to the present embodiment. The user terminal 20 has a plurality of transmitting/receiving antennas 201 for MIMO communication, amplifying sections 202, transmitting/receiving sections (transmitting section/receiving section) 203, a baseband signal processing section 204 and an application section 205.

As for downlink data, radio frequency signals that are received in a plurality of transmitting/receiving antennas 201 are each amplified in the amplifying sections 202, and subjected to frequency conversion and converted into the baseband signal in the transmitting/receiving sections 203. This baseband signal is subjected to receiving processes such as an FFT process, error correction decoding and retransmission control, in the baseband signal processing section 204. In this downlink data, downlink user data is forwarded to the application section 205. The application section 205 performs processes related to higher layers above the physical layer and the MAC layer. Also, in the downlink data, broadcast information is also forwarded to the application section 205. The transmitting/receiving sections 203 function as receiving sections to receive DL signals that include UL grants and DRX transition command information.

Meanwhile, uplink user data is input from the application section 205 to the baseband signal processing section 204. In the baseband signal processing section 204, a retransmission control (H-ARQ (Hybrid ARQ)) transmission process, channel coding, precoding, a DFT process, an IFFT process and so on are performed, and the result is forwarded to each transmitting/receiving section 203. The baseband signal that is output from the baseband signal processing section 204 is converted into a radio frequency band in the transmitting/receiving sections 203. After that, the amplifying sections 202 amplify the radio frequency signal having been subjected to frequency conversion, and transmit the resulting signal from the transmitting/receiving antennas 201.

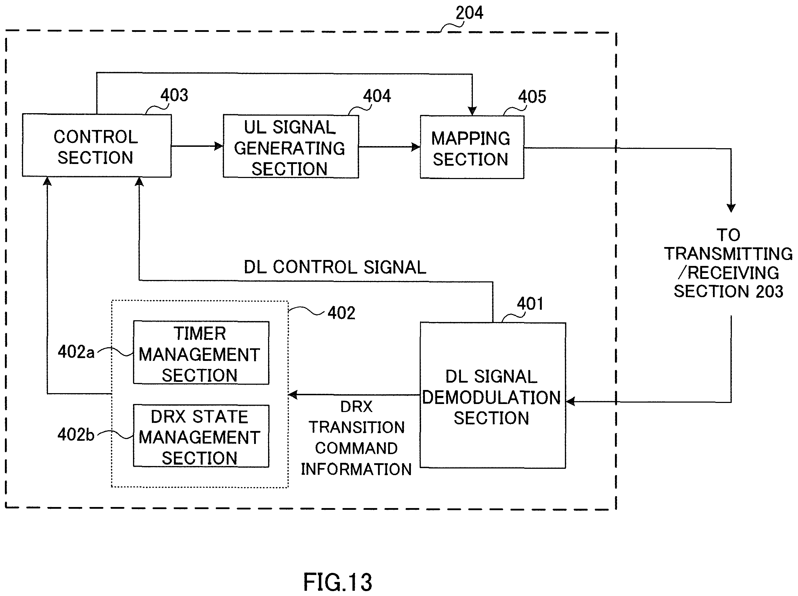

FIG. 13 is a diagram to show a principle functional structure of the baseband signal processing section 204 (which may include the application section 205) provided in the user terminal 20. As shown in FIG. 13, the baseband signal processing section 204 provided in the user terminal 20 is comprised at least of a DL signal demodulation section 401, a DRX control section 402 (a timer management section 402a and a DRX state management section 402b), a control section (feedback control section) 403, a UL signal generating section 404 and a mapping section 405.

The DL signal demodulation section 401 demodulates the downlink control signal (PDCCH signal) transmitted in the downlink control channel (PDCCH), and outputs the scheduling information (information regarding the allocation to uplink resources) to the DRX control section 402 and the control section 403. Also, the DL signal demodulation section 401 demodulates the downlink data signal transmitted in the downlink shared channel (PDSCH).

The DRX control section 402 has a timer management section 402a and a DRX state management section 402b, and controls the discontinuous reception (DRX) operations in the user terminal. The timer management section 402a manages a predetermined timer (for example, a DRX-inactivity timer) pertaining to DRX operations. For example, when the DRX-inactivity timer expires, the timer management section 402a sends a report to the DRX state management section 402b. The DRX state management section 402b manages the DRX state (transition to the DRX state and so on) in the user terminal.

For example, the DRX control section 402, when receiving a DL signal that includes a UL grant, controls the application of discontinuous reception based on the DRX transition command information included in this DL signal. When a transition to the discontinuous reception state is commanded by a DL signal including a UL grant, the DRX control section 402 can apply control so that a transition is made to the discontinuous reception state after a predetermined period (see above FIG. 5).

Also, if, after a transition to the discontinuous reception state is commanded by a DL signal including a UL grant, the DRX control section 402 receives a command to start or re-start the DRX-inactivity timer before making a transition to the discontinuous reception state, the DRX control section 402 may cancel the transition to the discontinuous reception state (see above FIG. 6).

Also, even when a transition to the discontinuous reception state is commanded by a DL signal including a UL grant, if the ACK in response to the UL signal that has been transmitted based on the UL grant cannot be received, the DRX control section 402 may cancel the transition to the discontinuous reception state.

The control section 403 controls the generation of uplink control signals (feedback signals) and uplink data signals based on downlink control signals (PDCCH signal) transmitted from the radio base station, retransmission control decisions in response to the PDSCH signals that have been received, and so on. Also, the control section 403 also functions as a feedback control section that controls the feedback of delivery acknowledgement signals (A/N's) in response to PDSCH signals. Note that when the DRX control section 402 decides to make a transition to the discontinuous reception state, the control section 403 stops operating.

The UL signal generating section 404 generates uplink control signals (feedback signals such as delivery acknowledgement signals, channel state information (CSI) and so on) based on commands from the control section 403. Also, the UL signal generating section 404 generates uplink data signals based on commands from the control section 403.

The mapping section 405 (allocation section) controls the allocation of uplink control signals (delivery acknowledgement signals, etc.) and uplink data signals to radio resources (the PUCCH and the PUSCH) based on commands from the control section 405.

## Claims

1. A user terminal (20, UE) comprising:
a receiving section (203) that is configured to receive a downlink, DL, signal at least including a uplink, UL, grant; and
a discontinuous reception, DRX, control section (204, 402) that is configured to control a discontinuous reception operation,
**characterized in that**, when receiving the DL signal including the UL grant, the DRX control section is configured to control the discontinuous reception operation based on a bit field related to a command for a DRX transition included in the DL signal, and the bit field included in the DL signal is transmitted via a Physical Downlink Control Channel, PDCCH,
wherein even when a transition to a discontinuous reception state is commanded in accordance with the bit field included in the DL signal including the UL grant, if the DRX control section (204, 402) receives a command to start or re-start a DRX Inactivity Timer before the transition to the discontinuous reception state, the DRX control section is configured to keep operating in an active state.

2. The user terminal (20, UE) according to claim 1, wherein the bit field included in the DL signal is included in downlink control information to indicate UL transmission and is transmitted on a downlink control channel.

3. A radio communication method for a user terminal (20, UE) that performs discontinuous reception, the radio communication method comprising:
receiving (ST101) a downlink, DL, signal at least including a uplink, UL, grant; and
**characterized by**, when receiving the DL signal including the UL grant, controlling (ST103) a discontinuous reception operation based on a bit field related to a command for a DRX transition included in the DL signal, and the bit field included in the DL signal is transmitted via a Physical Downlink Control Channel, PDCCH,
wherein, even when a transition to a discontinuous reception state is commanded in accordance with the bit field included in the DL signal including the UL grant, if a command to start or re-start a DRX Inactivity Timer is received before the transition to the discontinuous reception state, the method comprising keeping operating in an active state.

4. A system comprising a user terminal (20, UE) and a radio base station (10, eNB), the user terminal comprising:
a receiving section (203) that is configured to receive a downlink, DL, signal at least including a uplink, UL, grant; and
a discontinous reception, DRX, control section (204, 402) that is configured to control a discontinuous reception operation,
**characterized in that**, when receiving the DL signal including the UL grant, the DRX control section is configured to control the discontinuous reception operation based on a bit field related to a command for a DRX transition included in the DL signal, and the bit field included in the DL signal is transmitted via a Physical Downlink Control Channel, PDCCH,
wherein even when a transition to a discontinuous reception state is commanded in accordance with the bit field included in the DL signal including the UL grant, if the DRX control section (204, 402) receives a command to start or re-start a DRX Inactivity Timer before the transition to the discontinuous reception state, the DRX control section is configured to keep operating in an active state

## Patentansprüche

1. Benutzerendgerät (20, UE), umfassend:
einen Empfangsabschnitt (203), der zum Empfang eines Downlink-, DL-, Signals konfiguriert ist, das zumindest eine Uplink, UL-, Gewährung einschließt; und
einen Steuerabschnitt (204, 402) für diskontinuierlichen Empfang, DRX, der zur Steuerung eines diskontinuierlichen Empfangsvorgangs konfiguriert ist,
**dadurch gekennzeichnet, dass** beim Empfang des DL-Signals, das die UL-Gewährung einschließt, der DRX-Steuerabschnitt zur Steuerung des diskontinuierlichen Empfangsvorgangs basierend auf einem Bitfeld konfiguriert ist, das sich auf einen Befehl für einen DRX-Übergang bezieht, der in dem DL-Signal eingeschlossen ist, und das in dem DL-Signal eingeschlossene Bitfeld über einen physikalischen Downlink-Steuerkanal, PDCCH, übertragen wird,
wobei, selbst wenn ein Übergang zu einem diskontinuierlichen Empfangszustand in Übereinstimmung mit dem Bitfeld befohlen wird, das in dem DL-Signal eingeschlossen ist, das die UL-Gewährung einschließt, wenn der DRX-Steuerabschnitt (204, 402) einen Befehl zum Starten oder Neustarten eines DRX-Inaktivitätszeitgebers vor dem Übergang zu dem diskontinuierlichen Empfangszustand empfängt, der DRX-Steuerabschnitt so konfiguriert ist, dass er in einem aktiven Zustand weiterarbeitet.

2. Benutzerendgerät (20, UE) nach Anspruch 1, wobei das in dem DL-Signal eingeschlossene Bitfeld in der Downlink-Steuerinformation eingeschlossen ist, um die UL-Übertragung anzuzeigen, und auf einem Downlink-Steuerkanal übertragen wird.

3. Funkkommunikationsverfahren für ein Benutzerendgerät (20, UE), das einen diskontinuierlichen Empfang durchführt, wobei das Funkkommunikationsverfahren Folgendes umfasst:
Empfangen (ST101) eines Downlink-, DL-, Signals, das zumindest eine Uplink-, UL-, Gewährung einschließt; und
**dadurch gekennzeichnet, dass** beim Empfang des DL-Signals, das die UL-Gewährung einschließt, ein diskontinuierlicher Empfangsvorgang basierend auf einem Bitfeld gesteuert wird (ST103), das sich auf einen Befehl für einen DRX-Übergang bezieht, der in dem DL-Signal eingeschlossen ist, und das Bitfeld, das in dem DL-Signal eingeschlossen ist, über einen physikalischen Downlink-Steuerkanal, PDCCH, übertragen wird,
wobei, selbst wenn ein Übergang zu einem diskontinuierlichen Empfangszustand in Übereinstimmung mit dem Bitfeld befohlen wird, das in dem DL-Signal eingeschlossen ist, das die UL-Gewährung einschließt, wenn ein Befehl zum Starten oder Neustarten eines DRX-Inaktivitätszeitgebers vor dem Übergang zu dem diskontinuierlichen Empfangszustand empfangen wird, das Verfahren das Halten des Betriebs in einem aktiven Zustand umfasst.

4. System, umfassend ein Benutzerendgerät (20, UE) und eine Funkbasisstation (10, eNB), wobei das Benutzerendgerät Folgendes umfasst:
einen Empfangsabschnitt (203), der zum Empfang eines Downlink-, DL-, Signals konfiguriert ist, das zumindest eine Uplink, UL-, Gewährung einschließt; und
einen Steuerabschnitt (204, 402) für diskontinuierlichen Empfang, DRX, der zur Steuerung eines diskontinuierlichen Empfangsvorgangs konfiguriert ist,
**dadurch gekennzeichnet, dass** beim Empfang des DL-Signals, das die UL-Gewährung einschließt, der DRX-Steuerabschnitt zur Steuerung des diskontinuierlichen Empfangsvorgangs basierend auf einem Bitfeld konfiguriert ist, das sich auf einen Befehl für einen DRX-Übergang bezieht, der in dem DL-Signal eingeschlossen ist, und das in dem DL-Signal eingeschlossene Bitfeld über einen physikalischen Downlink-Steuerkanal, PDCCH, übertragen wird,
wobei, selbst wenn ein Übergang zu einem diskontinuierlichen Empfangszustand in Übereinstimmung mit dem Bitfeld befohlen wird, das in dem DL-Signal eingeschlossen ist, das die UL-Gewährung einschließt, wenn der DRX-Steuerabschnitt (204, 402) einen Befehl zum Starten oder Neustarten eines DRX-Inaktivitätszeitgebers vor dem Übergang zu dem diskontinuierlichen Empfangszustand empfängt, der DRX-Steuerabschnitt so konfiguriert ist, dass er in einem aktiven Zustand weiterarbeitet.

## Revendications

1. Terminal utilisateur (20, UE) comprenant :
une section de réception (203) qui est configurée pour recevoir un signal en liaison descendante, DL, incluant au moins une autorisation de liaison montante, UL ; et
une section de commande de réception discontinue, DRX, (204, 402) qui est configurée pour commander une opération de réception discontinue,
**caractérisé en ce que**, lors de la réception du signal DL incluant l'autorisation d'UL, la section de commande de DRX est configurée pour commander l'opération de réception discontinue sur la base d'un champ de bits se rapportant à une instruction pour un passage de DRX inclus dans le signal DL et le champ de bits inclus dans le signal DL est transmis par le biais d'un canal de commande de liaison descendante physique, PDCCH,
dans lequel, même lorsqu'un passage à un état de réception discontinue est ordonné selon le champ de bits inclus dans le signal DL incluant l'autorisation de DL, si la section de commande de DRX (204, 402) reçoit une instruction pour démarrer ou redémarrer un temporisateur d'inactivité de DRX avant le passage à l'état de réception discontinue, la section de commande de DRX est configurée pour garder le fonctionnement dans un état actif.

2. Terminal utilisateur (20, UE) selon la revendication 1, dans lequel le champ de bits inclus dans le signal DL est inclus dans des informations de commande de liaison descendante pour indiquer une transmission UL et est transmis sur un canal de commande de liaison descendante.

3. Procédé de communication radio pour un terminal utilisateur (20, UE) qui effectue une réception discontinue, le procédé de communication radio comprenant :
la réception (ST101) d'un signal en liaison descendante, DL, incluant au moins une autorisation de liaison montante, UL ; et
**caractérisé par**, lors de la réception du signal DL incluant l'autorisation d'UL, la commande (ST103) d'une opération de réception discontinue sur la base d'un champ de bits se rapportant à une instruction pour un passage de DRX inclus dans le signal DL et le champ de bits inclus dans le signal DL est transmis par le biais d'un canal de commande de liaison descendante physique, PDCCH,
dans lequel, même lorsqu'un passage à un état de réception discontinue est ordonné selon le champ de bits inclus dans le signal DL incluant l'autorisation d'UL, si une instruction pour démarrer ou redémarrer un temporisateur d'inactivité de DRX est reçue avant le passage à l'état de réception discontinue, le procédé comprenant le maintien du fonctionnement dans un état actif.

4. Système comprenant un terminal utilisateur (20, UE) et une station de base radio (10, eNB), le terminal utilisateur comprenant :
une section de réception (203) qui est configurée pour recevoir un signal en liaison descendante, DL, incluant au moins une autorisation de liaison montante, UL ; et
une section de commande de réception discontinue, DRX, (204, 402) qui est configurée pour commander une opération de réception discontinue,
**caractérisé en ce que**, lors de la réception du signal DL incluant l'autorisation d'UL, la section de commande de DRX est configurée pour commander l'opération de réception discontinue sur la base d'un champ de bits se rapportant à une instruction pour un passage de DRX inclus dans le signal DL et le champ de bits inclus dans le signal DL est transmis par le biais d'un canal de commande de liaison descendante physique, PDCCH,
dans lequel, même lorsqu'un passage à un état de réception discontinue est ordonné selon le champ de bits inclus dans le signal DL incluant l'autorisation d'UL, si la section de commande de DRX (204, 402) reçoit une instruction pour démarrer ou redémarrer un temporisateur d'inactivité de DRX avant le passage à l'état de réception discontinue, la section de commande de DRX est configurée pour garder le fonctionnement dans un état actif.
